# EUROPÄISCHE PATENTSCHRIFT

(11) **EP 3 391 949 B1**
(45) Veröffentlichungstag und Bekanntmachung des Hinweises auf die Patenterteilung: **06.03.2024**
(21) Anmeldenummer: 18000387.3
(22) Anmeldetag: 20.04.2018
(51) Int. Cl.: B01D 35/143, B01D 33/11, B01D 33/50, C02F 1/00

(54) **FILTERVORRICHTUNG FÜR DIE WASSERAUFBEREITUNG UND ARBEITSVERFAHREN FÜR EINE FILTERVORRICHTUNG FÜR DIE WASSERAUFBEREITUNG**
FILTER DEVICE FOR THE PURIFICATION OF WATER AND WORKING METHOD FOR A FILTER DEVICE FOR THE PURIFICATION OF WATER
DISPOSITIF FILTRANT DESTINÉ AU TRAITEMENT DE L'EAU ET PROCÉDÉ DE TRAVAIL POUR UN DISPOSITIF FILTRANT DESTINÉ AU TRAITEMENT DE L'EAU

(30) Priorität: 20.04.2017 DE 202017102343 U
(43) Veröffentlichungstag der Anmeldung: 24.10.2018
(73) Patentinhaber: Mösslein GmbH, 97816 Lohr am Main (DE)
(72) Erfinder: Kreser, Bernhard, 97816 Lohr am Main (DE); Mösslein, Günter, 97845 Neustadt (DE)
(74) Vertreter: Gleim, Christian Ragnar

(56) Entgegenhaltungen:
- WO-A1-88/04570
- WO-A1-2011/032583
- CN-A- 103 127 761
- DE-A1-102008 037 059
- DE-U1-202015 001 595
- US-A- 1 801 662
- US-A- 1 945 492

## Beschreibung

Die Erfindung betrifft eine Filtervorrichtung für die Wasseraufbereitung nach Anspruch 1 und ein Arbeitsverfahren für eine Filtervorrichtung für die Wasseraufbereitung nach Anspruch 8. Zur mechanischen Wasseraufbereitung sind Filtervorrichtungen, zum Beispiel zur Entfernung von Schwebstoffen, bekannt. Derartige Filter kommen typischerweise in der sogenannten Vorfiltration oder Hauptfiltration zum Einsatz. Es ist möglich, die Filtervorrichtungen auch nacheinander "geschalten" zu betreiben.

Filtervorrichtungen für die Wasseraufbereitung sind bereits in unterschiedlichen Ausgestaltungen bekannt. Derartige Filtervorrichtungen haben ein Zulaufrohr für die Zuführung von zu reinigendem Rohwasser und eine, das Zulaufrohr umschließende, Filtereinheit mit Siebgewebe enthaltenden Siebelementen zum Durchtritt des Rohwassers in ein, die Filtereinheit umgebendes, Becken zum Ablauf für das gefilterte Wasser.

Aus dem Stand der Technik sind zum Beispiel Scheibenfilter als Filtervorrichtungen bekannt. Die Scheibenfilter werden mit Sieben in eigenen separaten Behältern oder in dafür vorgesehene Becken um eine Achse drehbar eingebaut. Dabei wird das zu reinigende Wasser über ein Zentralrohr mit einer zentralen Zuleitung, einer Filterkassette mit Scheibenfiltern zugeführt. Das Wasser wird über das Zentralrohr gleichmäßig auf mehrere Filterkassetten verteilt. Die Siebvorrichtung hat ein entsprechend der Wasserqualität gewähltes Sieb mit einer Maschenweite von 10 bis 100 Mikrometern.

Die zurückgehaltenen Schmutzpartikel legen sich von innen auf die Siebflächen und setzen diese mit der Zeit zu. Eine ansteigende Druckdifferenz (bzw. der damit verbundene hydrostatische Druckanstieg) wird über einen Sensor im Zulauf gemessen und bei Überschreiten werden die Filterkassetten gedreht, so dass neue Filterflächen zur Verfügung stehen. Die Filterflächen sind dabei nur teilweise im Wasser eingetaucht und werden im gedrehten Zustand über bewegliche Hochdruck-Spüldüsen gereinigt, so dass diese bei der nächsten Drehung wieder für die Filtration zur Verfügung stehen. Das Filtrat wird in einer Wanne unterhalb des Scheibenfilters gesammelt. Der Nachteil der Scheibenfilter ist, dass die Reinigung oft unzureichend ist, insbesondere weil das Sieb eine komplizierte Geometrie hat, bei der viele verschiedene Siebflächen unter verschiedenen Winkeln zueinander angeordnet sind, so dass die Reinigungsdüsen zum Besprühen für bestimmte Flächen einen ungünstigen Winkel haben.

In der AT 265 315 B ist eine Filtervorrichtung beschrieben, welche eine Filtertrommel mit einem der Länge nach entlang des Umfangs der Trommel verlaufenden Filtermantel umfasst, welcher parallel entlang der Trommeldrehachse in Zickzackfalten gelegt ist. Für das Reinigen dieses Filtermantels werden radial zur Filtertrommel ausgerichtete Reinigungsdüsen verwendet, welche Luft ausstoßen, um den Filtermantel von dem, auf der Innenseite festgesetzten, Filtrat zu reinigen. Aufgrund dieser geometrischen Anordnung der radial ausgerichteten Düsen zu dem in Zickzackfalten gelegten Filtermantel ergibt sich ein, für die Reinigung bestimmter Siebflächen des Filtermantels, ungünstiger Winkel der Reinigungsdüsen zu bestimmten Siebflächen, so dass der Filtermantel nur unzureichend gereinigt wird und sich schnell mit Filtrat festsetzt.

Aus der DE 26 29 958 A1 und der EP 0 553 293 B1 ist es ferner bekannt, das Sieb in einem Gehäuse in Form einer, über einen Antrieb drehbaren, Trommel auszubilden, wobei auf der Außenseite der Trommel ein Siebgewebe angeordnet ist. Die Trommel wird vom verunreinigten Wasser bzw. Schlamm kontinuierlich durchspült, wobei sich auf dem die Trommelaußenflächen bildenden Siebgewebe mit der Zeit eine Schicht des zu trennenden Stoffs sammelt. Der Nachteil dabei ist, dass sich das Siebgewebe entlang des Außenumfangs schnell zusetzt

Andere relevante Dokumente sind CN103127761, WO8804570, WO2011032583 und US1945492.

Es ist die Aufgabe der Erfindung eine Filtervorrichtung für die Wasseraufbereitung bereitzustellen, die die Nachteile im Stand der Technik überwindet und die insbesondere sich nicht schnell zusetzt und eine gut zu reinigende Siebanordnung hat. Außerdem ist es die Aufgabe der Erfindung ein Arbeitsverfahren für eine Filtervorrichtung für die Wasseraufbereitung, mit dem aus dem Wasser möglichst kleine Partikel filterbar sind, bereitzustellen.

Die Erfindung umfasst eine Filtervorrichtung für die Wasseraufbereitung mit einem Zulaufrohr für die Zuführung von zu reinigendem Rohwasser und mit einer das Zulaufrohr umschließenden, um eine Drehachse A-A drehbare, Filtereinheit, wobei die Filtereinheit Siebelemente zum Durchtritt des Rohwassers in ein, die Filtereinheit umgebendes, Becken für gefiltertes Wasser hat. Die Filtereinheit umfasst mehrere, parallel zur Drehachse A-A sich über die Länge der Filtereinheit erstreckende, im Querschnitt dreieckige, mit einer Spitze radial nach außen angeordnete, Siebelemente. Die Form und Anordnung der Siebelemente hat den Vorteil, dass viel Oberfläche für Siebgewebe vorhanden ist und zudem ist die Geometrie der Siebelemente einfach und entsprechend gut zu reinigen.

Bevorzugt umfasst die Filtervorrichtung jeweils einen Simmerring am Lager, um das Innere der Filtereinheit derart (komplett) fluiddicht abzudichten, dass das Rohwasser nur durch das Siebelement in das, die Filtereinheit umgebende, Becken für gefiltertes Wasser gelangt. Insbesondere liegt ein Augenmerk auf eine zwischen Rohwasser und Filtratwasser völlig abgetrennte Trommel, die über Dichtelemente die hermetische Trennung von Rohwasser und Filtrat sicherstellt.

Gemäß einem bevorzugten Aspekt umfasst jedes Siebelement einen Kunststoffrahmen und ein an dem Kunststoffrahmen angeordnetes (eingebettetes) Siebgewebe. Der Kunststoffrahmen gibt dem, sich nach außen weg erstreckenden, Siebelement eine gute Stabilität. In einem vorteilhaften Beispiel sind 10 bis 20 (z. B. 14) Siebelemente gleichförmig verteilt am Umfang der Filtereinheit angeordnet.

Bevorzugt ist das Siebgewebe aus Edelstahl (Drahtgewebe) oder Kunststoff mit einer Maschenweite von 5 bis 100 Mikrometern. Das Siebgewebe kann aus mehreren Teilen bestehen, die jeweils von einem gitterförmigen Kunststoffrahmen umschlossen sind.

Ferner bevorzugt sind die Siebelemente an der radial nach außen angeordneten Spitze abgerundet ausgebildet.

Besonders bevorzugt umfasst die Filtervorrichtung eine oberhalb der Filtereinheit angeordnete Sprüheinheit. Die Sprüheinheit ist über einer in der Filtereinheit angeordneten Ablaufrinne angeordnet. Aufgrund dieser Anordnung fällt aus der Sprüheinheit das zum Reinigen auf die Siebgewebe versprühte Wasser zusammen mit dem abgespülten Schmutz (gefilterte Rückstände) auf die Ablaufrinne. Die Ablaufrinne führt diesen Schmutz aus der Filtereinheit.

Ein anderer vorteilhafter Aspekt sieht vor, dass die Sprüheinheit mehrere Sprühdüsen umfasst, welche Sprühdüsen in mindestens zwei (parallelen) Reihen angeordnet sind. Die Sprühdüsen sind dabei derart angeordnet, um in Richtung der jeweils anderen Reihe von Sprühdüsen (aufeinander zu) zu sprühen. Auf diese Art und Weise lassen sich die im Querschnitt dreieckigen, mit einer Spitze radial nach außen angeordneten, Siebelemente auf beiden Außenflächen gleichzeitig absprühen.

Es ist zudem bevorzugt, dass die Sprüheinheit an eine (Reinigungs-)Pumpe angeschlossen ist. Die Pumpe ist derart eingerichtet, um Wasser aus dem Becken mit gefiltertem Wasser zu den Sprühdüsen zu fördern. Indem der Ansaugstutzen der Pumpe in dem Becken mit dem gefilterten Wasser ist, lässt sich baulich einfach sauberes Sprühwasser zur Verfügung stellen.

Gemäß einem weiteren Aspekt der Erfindung umfasst die Filtervorrichtung eine Steuereinheit, einen Rückspülsensor, einen Wassermangelsensor und einen Überlaufsensor. Durch den Verschmutzungsgrad der Siebfilter steigt der Wasserstand in der Filtereinheit an. Über den Rückspülsensor wird der Wasserstand in der Filtereinheit erfasst und bei Erreichen einer entsprechenden Wasserhöhe wird der Reinigungsprozess in Gang gesetzt. Bei diesem Reinigungsprozess wird Wasser über die Pumpe durch die Sprühdüsen auf die Außenseite der Siebelemente der langsam drehenden Filtereinheit gesprüht, um Siebelemente von außen nach innen zu reinigen.

Die Filtereinheit läuft im Becken mit gefiltertem Wasser, welches den Wasservorrat für die Rückspülpumpe sicherstellt. Ein ausreichender Wasserstand wird durch den Wassermangelsensor sichergestellt.

Der Überlaufsensor ist als Sicherheitseinrichtung vorgesehen, da bei einem zu starken Anstieg des Rohwassers dieses ins gefilterte Wasser überläuft. So kann über den Überlaufsensor die Zufuhr (externes Ventil) geschlossen und die Maschine in Störbetrieb gesetzt werden.

Die Erfindung umfasst ferner ein Arbeitsverfahren für die Wasseraufbereitung durch Reinigung von Rohwasser mit der erfindungsgemäßen Filtervorrichtung. Das Arbeitsverfahren ist dadurch gekennzeichnet, dass die Filtereinheit mindestens ein Siebelement mit einer Maschenweite von 100 bis 5 Mikrometern umfasst und wobei aus dem Rohwasser, bei dessen Durchtritt durch die Filtereinheit, Partikel (z. B. Schwebstoffe) mit 5 Mikrometer Partikelgröße gefiltert werden.

Im Folgenden wird die Erfindung anhand der in den beigefügten Zeichnungen dargestellten Beispiele näher erläutert.

Es zeigen:
- Fig. 1: seitliche Schnittansicht eines Ausführungsbeispiels der Filtervorrichtung für die Wasseraufbereitung; und
- Fig. 2: eine perspektivische Schnittansicht der Filtervorrichtung aus Fig. 1.

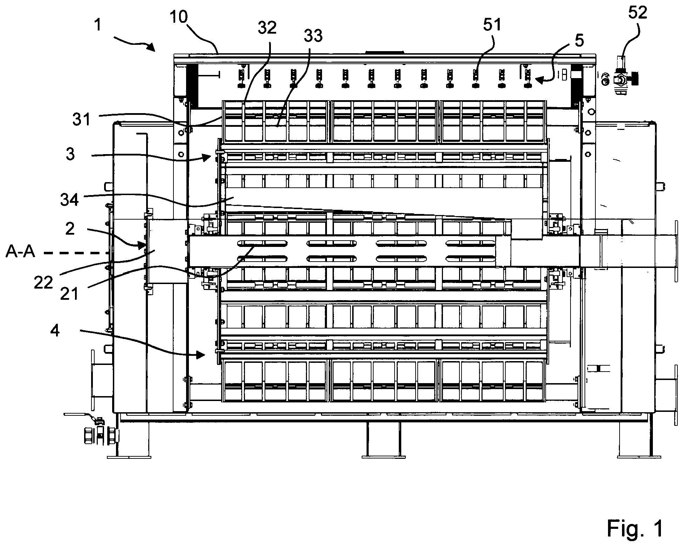

**Fig. 1** erläutert die Filtervorrichtung 1 für die Wasseraufbereitung anhand von einem Ausführungsbeispiel der Erfindung. Filtervorrichtung 1 hat ein Zulaufrohr 2, durch welches das zum Beispiel von Schwebstoffen zu reinigende Rohwasser eingeleitet wird. Zulaufrohr 2 (hat Zulauföffnungen 21 und) wird entlang eines Abschnitts von einer um die Drehachse A-A drehbaren Filtereinheit 3 umschlossen, wobei die Drehachse A-A mit der Mittelachse vom Zulaufrohr 2 zusammenfällt. Filtereinheit 3 hat insgesamt vierzehn am Umfang angeordnete Siebelemente 31 zum Durchtritt des Rohwassers in ein, die Filtereinheit 3 umgebendes, Becken 4 für das gefilterte Wasser. Damit viel Oberfläche für Siebgewebe vorhanden und zudem die Geometrie der Siebelemente 31 einfach und entsprechend gut zu reinigen ist, hat die Filtereinheit 3 mehrere, parallel zur Drehachse A-A sich über die Länge der Filtereinheit 3 erstreckende, im Querschnitt dreieckige, mit einer Spitze radial nach außen angeordnete, Siebelemente 31.

Jedes Siebelement 31 umfasst einen Kunststoffrahmen 32 und eine Vielzahl von, an dem Kunststoffrahmen 32 angeordneten, Siebgeweben 33, die im vorliegenden Beispiel aus Edelstahl sind und eine Maschenweite zwischen 5 und 100 Mikrometern haben.

Die Filtereinheit 3 ist mit einem (Kugel-, oder Walzen-) Lager 22 drehbar auf dem Zulaufrohr 2 angeordnet. Darüberhinaus kann die Filtervorrichtung 1 jeweils einen Simmerring am Lager 22 haben, um den Innenraum der Filtereinheit 3 wasserdicht abzudichten. So gelangt das Rohwasser nur durch die Siebelemente 31 aus der Filtereinheit 3 in das, die Filtereinheit 3 umgebende, Becken 4 für gefiltertes Wasser. Im gezeigten Beispiel umfasst die Filtervorrichtung 1 ein Gehäuse 10 mit einem, die Filtereinheit 3 umgebenden, Becken 4 für das gefilterte Wasser.

Zur Reinigung der Siebgewebe ist oberhalb der Filtereinheit 3 eine Sprüheinheit 5 zum Sprühen von Reinigungsflüssigkeit auf die Siebgewebe 33 vorgesehen. Die Sprüheinheit 5 ist dafür über einer in der Filtereinheit 3 angeordneten, zum Abführen des abgespülten Filterschmutzes aus der Filtereinheit 3 bzw. aus der Filtervorrichtung 1 vorgesehenen, Ablaufrinne 34 angeordnet.

Die Ablaufrinne 34 führt dazu in das baulich geteilte Zulaufrohr 2, welches im vorderen Teil das Rohwasser zuführt und im hinteren Teil das schmutzige Sprühwasser abführt. So kann ein einziges Rohr als Zulaufrohr 2 mit einem Ablaufabschnitt ausgebildet werden.

Die Sprüheinheit 5 hat im gezeigten Beispiel vierundzwanzig Sprühdüsen 51, die in zwei Reihen mit jeweils zwölf Sprühdüsen 51 angeordnet sind, und wobei die Sprühdüsen 51 derart angeordnet sind, um in Richtung der jeweils anderen Reihe von Sprühdüsen 51 zu sprühen. Dazu kann die Filtereinheit 3 mittels einer Antriebsvorrichtung langsam gedreht werden.

Sprüheinheit 5 ist an eine Pumpe 52 angeschlossen, wobei die Pumpe 52 derart eingerichtet ist, um gefiltertes Wasser aus dem Becken 4 zu den Sprühdüsen 51 zu fördern.

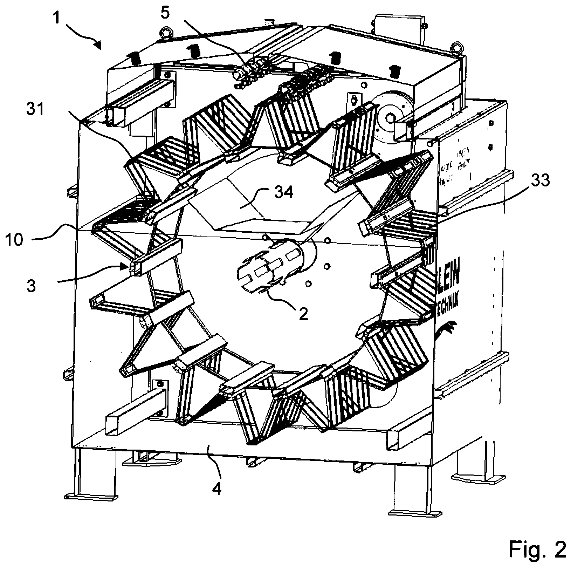

In **Fig. 2** ist eine perspektivische Schnittansicht der Filtervorrichtung 1 aus Fig. 1 schematisch dargestellt. Filtervorrichtung 1 hat ein Zulaufrohr 2, das von der Filtereinheit 3 umschlossen ist. Filtereinheit 3 hat in diesem Beispiel insgesamt vierzehn am Umfang angeordnete Siebelemente 31 zum Durchtritt des Rohwassers in das, die Filtereinheit 3 umgebende, Becken 4 für das gefilterte Wasser. Die Siebelemente 31 sind, sich über die Länge der Filtereinheit 4 erstreckend, im Querschnitt dreieckig ausgebildet und mit einer Spitze radial nach außen angeordnet.

Die Filtereinheit 3 ist drehbar und oberhalb ist zur Reinigung der Siebgewebe 33 eine Sprüheinheit 5 zum Sprühen von Reinigungsflüssigkeit auf die Siebgewebe 33 vorgesehen. Die Sprüheinheit 5 ist dafür über einer in der Filtereinheit 3 angeordneten Ablaufrinne 34 zum Abführen des abgespülten Filterschmutzes aus der Filtereinheit 3 bzw. aus der Filtervorrichtung 1 eingebaut.

## Patentansprüche

1. Filtervorrichtung (1) für die Wasseraufbereitung mit einem Zulaufrohr (2) für die Zuführung von zu reinigendem Rohwasser und einer das Zulaufrohr (2) entlang eines Abschnitts umschließenden, um eine Drehachse (A-A) drehbaren, Filtereinheit (3) mit Siebelementen (31) zum Durchtritt des Rohwassers in ein, die Filtereinheit (3) umgebendes, Becken (4) für gefiltertes Wasser, **dadurch gekennzeichnet, dass** die Filtereinheit (3) mehrere, parallel zur Drehachse (A-A) sich über die Länge der Filtereinheit (3) erstreckende, im Querschnitt dreieckige, mit einer Spitze radial nach außen angeordnete, Siebelemente (31) umfasst, wobei das Siebgewebe (33) aus Edelstahl oder Kunststoff ist, und wobei das Siebgewebe eine Maschenweite von 5 bis 100 Mikrometern hat, um aus dem Rohwasser, bei dessen Durchtritt durch die Filtereinheit, Partikel mit 5 Mikrometer Partikelgröße zu filtern, wobei die Filtereinheit (3) mit einem Lager (22) drehbar auf dem Zulaufrohr (2) angeordnet ist, wobei die Filtervorrichtung (1) jeweils einen Simmerring am Lager (22) umfasst, um das Innere der Filtereinheit (3) derart fluiddicht abzudichten, dass das Rohwasser nur durch das Siebelement (31) in ein, die Filtereinheit (3) umgebendes, Becken (4) für gefiltertes Wasser gelangt, und wobei die Filtervorrichtung ferner eine oberhalb der Filtereinheit (3) angeordnete Sprüheinheit (5), wobei die Sprüheinheit (5) über eine in der Filtereinheit (3) angeordneten Ablaufrinne (34) angeordnet ist, umfasst, wobei die Ablaufrinne (34) in ein baulich geteiltes Zulaufrohr (2) führt, welches im Betrieb in einem Teil Rohwasser zuführt und in einem anderen Teil schmutzige Sprühwasser abführt.

2. Filtervorrichtung (1) nach Anspruch 1, wobei jedes Siebelement (31) einen Kunststoffrahmen (32) und ein an dem Kunststoffrahmen (32) angeordnetes Siebgewebe (33) umfasst.

3. Filtervorrichtung (1) nach Anspruch 2, wobei die Siebelemente (31) an der radial nach außen angeordneten Spitze abgerundet ausgebildet sind.

4. Filtervorrichtung (1) nach einem der vorangehenden Ansprüche, ferner umfassend ein Gehäuse (10) mit einem, die Filtereinheit (3) umgebenden, Becken (4) für das gefilterte Wasser.

5. Filtervorrichtung (1) nach Anspruch 1, wobei die Sprüheinheit (5) mehrere Sprühdüsen (51) umfasst, die in zwei Reihen angeordnet sind, und wobei die Sprühdüsen (51) derart angeordnet sind, um in Richtung der jeweils anderen Reihe von Sprühdüsen (51) zu sprühen.

6. Filtervorrichtung (1) nach Anspruch 1, wobei die Sprüheinheit (5) an eine Pumpe (52) angeschlossen ist, und wobei die Pumpe (52) derart eingerichtet ist, um gefiltertes Wasser aus dem Becken (4) zu den Sprühdüsen (51) zu fördern.

7. Filtervorrichtung (1) nach einem der vorangehenden Ansprüche, ferner umfassend eine Steuereinheit, einen Rückspülsensor, einen Wassermangelsensor und einen Überlaufsensor.

8. Arbeitsverfahren für die Wasseraufbereitung durch Reinigung von Rohwasser mit einer Filtervorrichtung (1) nach einem der vorangehenden Ansprüche, **dadurch gekennzeichnet, dass** aus dem Rohwasser bei dessen Durchtritt durch die Filtereinheit (3) Partikel (z. B. Schwebstoffe) mit 5 Mikrometer Partikelgröße kontinuierlich gefiltert werden.

## Claims

1. Filter device (1) for water treatment with an inlet pipe (2) for the supply of raw water to be purified and a filter unit (3) which encloses the inlet pipe (2) along a section and is rotatable about an axis of rotation (A-A) and has sieve elements (31) for the passage of the raw water into a basin (4) for filtered water surrounding the filter unit (3), **characterised in that** the filter unit (3) has a plurality of sieve elements (31) which extend parallel to the axis of rotation (A-A) over the length of the filter unit (3), are triangular in cross-section and are arranged with a tip radially outwardly, wherein the sieve mesh (33) is made of stainless steel or plastic, and wherein the sieve mesh has a mesh size of 5 to 100 micrometers in order to filter particles with a particle size of 5 micrometers from the raw water as it passes through the filter unit, wherein the filter unit (3) is equipped with a bearing (22) so as to be rotatable on the inlet pipe (2), wherein the filter device (1) comprises a respective shaft seal on the bearing (22) to seal the interior of the filter unit (3) in a fluid-tight manner such that the raw water only passes through the sieve element (31) into a basin (4) for filtered water surrounding the filter unit (3), and wherein the filter device further comprises a spraying unit arranged above the filter unit (3), **characterised in that** the spraying unit (4) is arranged above the filter unit (3), wherein the spraying unit (5) is arranged above a drain channel (34) arranged in the filter unit (3), wherein the drain channel (34) leads into a structurally divided inlet pipe (2), which in operation supplies raw water in one part and discharges dirty spray water in another part.

2. Filter device (1) according to claim 1, wherein each sieve element (31) comprises a plastic frame (32) and a sieve fabric (33) arranged on the plastic frame (32).

3. Filter device (1) according to claim 2, wherein the sieve elements (31) are designed in a rounded manner at the tip which is arranged radially outwardly.

4. Filter device (1) according to one of the preceding claims, further comprising a casing (10) with a basin (4) for the filtered water surrounding the filter unit (3).

5. Filter device (1) according to claim 1, wherein the spraying unit (5) comprises a plurality of spraying nozzles (51) arranged in two rows, and wherein the spraying nozzles (51) are arranged so as to spray in the direction of the respective other row of spraying nozzles (51).

6. Filter device (1) according to claim 1, wherein the spraying unit (5) is connected to a pump (52), and wherein the pump (52) is arranged to deliver filtered water from the basin (4) to the spraying nozzles (51).

7. Filter device (1) according to one of the preceding claims, further comprising a control unit, a backwash sensor, a water-shortage sensor and an overflow sensor.

8. Working method for water treatment by purification of raw water with a filter device (1) according to one of the preceding claims, **characterised in that** particles (e.g. suspended matter) with a particle size of 5 micrometers are continuously filtered from the raw water as it passes through the filter (3).

## Revendications

1. Dispositif de filtrage (1) pour le traitement de l'eau avec une conduite d'entrée (2) pour l'alimentation en eau brute à purifier et une unité de filtrage (3) qui entoure la conduite d'entrée (2) le long d'une section et est rotative autour d'un axe de rotation (A-A) et a des éléments de tamisage (31) pour le passage de l'eau brute dans un bassin (4) pour l'eau filtrée entourant l'unité de filtrage (3), **caractérisé par le fait que** l'unité de filtrage (3) possède plusieurs éléments de tamisage (31) qui s'étendent parallèlement à l'axe de rotation (A-A) sur la longueur de l'unité de filtrage (3), ont une section transversale triangulaire et sont disposés avec une pointe radialement vers l'extérieur, dans lequel la toile de tamisage (33) est en acier inoxydable ou en plastique, et dans lequel la toile de tamisage a une taille de maille de 5 à 100 micromètres afin de filtrer les particules d'une taille de 5 micromètres de l'eau brute lorsque celle-ci passent à travers l'unité de filtrage, dans lequel l'unité de filtrage (3) est équipée d'un palier (22) de manière à pouvoir tourner sur la conduite d'entrée (2), dans lequel le dispositif de filtrage (1) comprend un joint d'arbre respectif sur le palier (22) pour sceller l'intérieur de l'unité de filtrage (3) de manière étanche au fluide de sorte que l'eau brute ne passe qu'à travers l'élément de tamisage (31) dans un bassin (4) pour l'eau filtrée entourant l'unité de filtrage (3), et dans lequel le dispositif de filtrage comprend en outre une unité de pulvérisation disposée au-dessus de l'unité de filtrage (3), **caractérisé en ce que** l'unité de pulvérisation (4) est disposée au-dessus de l'unité de filtrage (3), dans lequel une unité de pulvérisation (5) est disposée au-dessus d'un canal de drainage (34) disposé dans l'unité de filtrage (3), dans lequel un canal de drainage (34) mène à une conduite d'entrée (2) structurellement divisé, qui en fonctionnement alimente l'eau brute dans une partie et évacue l'eau de pulvérisation sale dans l'autre partie.

2. Dispositif de filtrage (1) selon la revendication 1, dans lequel chaque élément de tamisage (31) comprend un cadre en plastique (32) et une toile de tamisage (33) disposé sur le cadre en plastique (32).

3. Dispositif de filtrage (1) selon la revendication 2, dans lequel les éléments de tamisage (31) sont conçus de manière arrondie à la pointe qui est disposée radialement vers l'extérieur.

4. Dispositif de filtrage (1) selon l'une des revendications précédentes, comprenant en outre un boîtier (10) avec un bassin (4) pour l'eau filtrée entourant l'unité de filtrage (3).

5. Dispositif de filtrage (1) selon la revendication 1, dans lequel l'unité de pulvérisation (5) comprend une pluralité de buses de pulvérisation (51) disposées en deux rangées, et dans lequel les buses de pulvérisation (51) sont disposées de manière à pulvériser dans la direction de l'autre rangée respective de buses de pulvérisation (51).

6. Dispositif de filtrage (1) selon la revendication 1, dans lequel l'unité de pulvérisation (5) est reliée à une pompe (52), et dans lequel la pompe (52) est disposée de manière à envoyer l'eau filtrée du bassin (4) vers les buses de pulvérisation (51).

7. Dispositif de filtrage (1) selon l'une des revendications précédentes, comprenant en outre une unité de commande, un capteur de lavage à contre-courant, un capteur de manque d'eau et un capteur de débordement.

8. Procédé de travail pour le traitement de l'eau par purification de l'eau brute avec un dispositif de filtrage (1) selon l'une des revendications précédentes, **caractérisé par le fait que** les particules (par exemple les matières en suspension) d'une taille de 5 micromètres sont filtrées en continu de l'eau brute lors de son passage à travers de l'unité de filtrage (3).
